(19) Europäisches Patentamt / European Patent Office / Office européen des brevets

(11) **EP 2 596 657 B1**

(12) **EUROPEAN PATENT SPECIFICATION**

(45) Date of publication and mention
of the grant of the patent:
**08.03.2017   Bulletin 2017/10**

(51) Int Cl.:
***H04W 16/18*** *(2009.01)*

(21) Application number: **11749447.6**

(22) Date of filing: **01.09.2011**

(86) International application number:
**PCT/EP2011/065137**

(87) International publication number:
**WO 2012/010715 (26.01.2012 Gazette 2012/04)**

(54) **METHODS AND ARRANGEMENTS FOR ESTIMATING SIGNAL STRENGTH IN A SUB-REGION**

VERFAHREN UND ANORDNUNGEN ZUR SCHÄTZUNG DER SIGNALSTÄRKE IN EINEM UNTERBEREICH

MÉTHODES ET DISPOSITIFS POUR L'ESTIMATION DE LA PUISSANCE D'UN SIGNAL DANS UNE SOUS-RÉGION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **23.07.2010   US 367112 P**

(43) Date of publication of application:
**29.05.2013   Bulletin 2013/22**

(73) Proprietor: **Optis Wireless Technology, LLC
Plano, TX 75025 (US)**

(72) Inventors:
• **SACHS, Joachim
191 34 Sollentuna (SE)**

• **ERIKSSON, Claes
S-162 70 Vällingby (SE)**
• **QUESETH, Olav
S-170 69 Solna (SE)**
• **SELÈN, Yngve
S-754 34 Uppsala (SE)**

(74) Representative: **Grünecker Patent- und
Rechtsanwälte
PartG mbB
Leopoldstraße 4
80802 München (DE)**

(56) References cited:
**WO-A1-02/073997      US-B1- 6 580 911
US-B1- 6 985 839**

**Description**

TECHNICAL FIELD

The present disclosure relates to a method and an arrangement in a network node for estimating signal strength in a sub-region.

BACKGROUND

Radio spectrum is a scarce natural resource that may be used for a variety of services in civilian as well as military applications. The variety of services includes mobile communication services, broadcast services, satellite services, navigation services, radio-astronomy services and the like. Traditionally, spectrum resources are allocated to one particular service by spectrum regulators within a country or region on a long-term basis. The International Telecommunications Union has identified that spectrum demand for mobile communication services, more specifically, International Mobile Telecommunications, IMT, below 6 GHz, over the next decade is approximately three times larger than the amount of spectrum resources available for such an assignment today. Therefore, there is a need for efficient use of spectrum resources.

While it is known that spectrum resources should be used efficiently, spectrum measurements have shown that spectrum resources that are allocated to some services are often poorly utilized. Therefore, new types of spectrum resource usage emerge which are based on the paradigm of sharing between a primary and a secondary system (sometimes referred to as a primary and secondary user). The secondary systems are sometimes referred to as cognitive radio systems. In some cognitive radio deployments, there exist further secondary systems. In a secondary user context, the primary system has the usage right of a particular spectrum band. Simultaneously, the secondary system can use the spectrum band of the primary system in such a way that the secondary system does not interfere with services of the primary system. Thereby, the secondary system may use spectrum opportunities, also referred to as white spaces or spectrum holes, which are unused spectrum resources of the primary system in the space-time-frequency dimension.

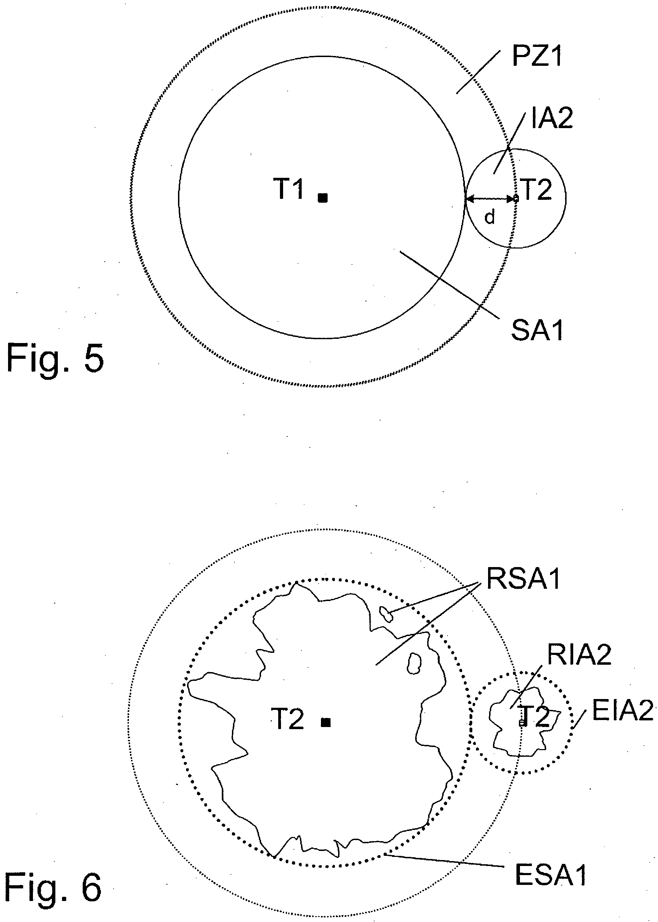

For primary systems that have static frequency assignments (e.g. TV systems with long-term configured channel assignments and fixed transmitter locations) protection of the primary service, i.e. the service of the primary system, can be done by defining a primary protection zone for a certain channel C1 around a primary transmitter T1 (of the primary system) using this channel for a specified time. For channels adjacent in frequency to C1, it may also be necessary to define similar protection zones due to out-of-band power leakage and imperfect filters. This is depicted in Fig. 5. A secondary transmitter T2 of the secondary system can use the primary frequency resource, i.e. the certain channel C1, if it remains outside the primary protection zone PZ1. This has the effect that interference, caused by transmissions from the secondary transmitter, to the primary transmitter remains below an acceptable threshold. In the Figure, a service area of the primary transmitter T1 is denoted SA1 and an interference area of the secondary transmitter T2 is denoted IA2. The protection zone extends beyond the service area by the interference distance d of the secondary transmitter as shown in the Figure, preferably including some additional margin (not shown). This kind of operation has, for example, been specified by the US regulator FCC (Federal Communications Commission) for transmissions from secondary systems using white spaces within the TV frequency band. A database provides information about the sizes and locations of the protection zones for different TV broadcasting transmitters for different channels to the secondary system(s). Such white space operation could be used, for example, to increase the transmission capacity of cellular mobile broadband networks.

A problem with the above mentioned solution is that the protections zone often is too conservatively estimated, i.e. unnecessarily large, which may lead to that the amount of available spectrum resources for other systems, such as mobile communication systems, is too small to provide services like voice, web-applications, streaming of music and video and more.

It has been proposed to improve estimations of service and interference areas by means of sensing the signal strengths at locations around the primary and/or secondary transmitter. This approach is in the following referred to as a sensing procedure. By using the sensing procedure, nearly the real service/interference areas as shown in **Fig. 6,** rather than the estimated areas, may be detected. In the Figure, a real interference area and an estimated interference area of the secondary transmitter T2 and a real service area and an estimated service area of the primary transmitter T1 are denoted RIA2, EIA2, RSA1 and ESA1, respectively. A limitation of the sensing procedure is that the received signal strength can vary significantly between locations separated by short distances. This variation is often already noticeable within a few meters (e.g. indoors) up to some tens or hundreds of meters (e.g. outdoors). Therefore, very fine spatial sampling is required in order to be able to determine contours of real service/interference areas accurately. Disadvantageously, very fine spatial sampling requires a large set of sensors. Typically, the required number of sensors per unit area is not sufficient to determine real service/interference areas based on the sensing procedure.

Patent US 6,580,911 B1 describes a clutter database enhancement methodology. An enhanced clutter database and modeling tool are provided for use in determining the propagation characteristics and requisite transmitted signal strengths for physical regions having attenuating objects therein. The enhanced clutter database supports a plurality of different resolution levels and can therefore be used to adjust transmission requirements for both large and small coverage areas. A plurality of bins and sub-bins are defined and values provided for in the enhanced clutter database to further distinguish clutter types within portions of the coverage area. Adjustment of the transmission requirements can be manually initiated or automatically conducted using the enhanced clutter database. The enhanced clutter database is populated by fusing geographical data with more detailed supplemental physical environment data provided by one or more data collection services.

SUMMARY

An object of the present invention is to improve the procedure for estimating signal strength in a sub-region associated with a radio transmitter, such as the primary and/or a secondary radio transmitter.

This object is solved by the present invention as claimed in the appended independent claims. Advantages and/or preferred embodiments of the present invention are defined by the appended dependent claims.

According to an aspect, the object is achieved by a method in a network node for estimating signal strength in at least one sub-region of a radio transmitter located at a radio transmitter location. Each of said at least one sub-region is identified by corresponding sub-region coordinate information. The network node has access to a database, comprising model settings information about a plurality of model settings regions associated with the radio transmitter. In a step, the network node obtains, for each of said at least one sub-region, from the database corresponding model settings information, indicative of radio propagation conditions within one of said plurality of model settings regions. Said one of said plurality of model settings regions corresponds to said at least one sub-region in that said one of said plurality of model settings regions comprises at least a portion of said at least one sub-region. The model settings information is dependent on the model settings region. In another step, the network node estimates, for each of said at least one sub-region, a corresponding signal strength value based on the radio transmitter location, the corresponding sub-region coordinate information and the model settings information. The signal strength value relates to a signal capable of being sent from the radio transmitter to a radio receiver located within said at least one sub-region.

According to another aspect, the object is achieved by an arrangement in a network node for estimating signal strength in at least one sub-region of a radio transmitter, located at a radio transmitter location. Each of said at least one sub-region is identified by corresponding sub-region coordinate information. The network node has access to a database, comprising model settings information about a plurality of model settings regions associated with the radio transmitter. The arrangement may comprise an obtaining unit configured to, for each of said at least one sub-region, obtain, from the database corresponding model settings information, indicative of radio propagation conditions within one of said plurality of model settings regions. Said one of said plurality of model settings regions corresponds to said at least one sub-region in that said one of said plurality of model settings regions comprises at least a portion of said at least one sub-region. The model settings information is dependent on the model settings region. The arrangement may further comprise an estimating unit configured to, for each of said at least one sub-region, estimate a corresponding signal strength value based on the radio transmitter location, the corresponding sub-region coordinate information and the model settings information. The signal strength value relates to a signal capable of being sent from the radio transmitter to a radio receiver located within said at least one sub-region.

According to a further aspect, there is provided a network node, which obtains, for at least one sub-region of said plurality of sub-regions, from the database corresponding model settings information. The model settings information is dependent on a model settings region associated thereto. A signal strength value within said at least one sub-region is estimated based on the radio transmitter location, the corresponding sub-region coordinate information and the corresponding model settings information. Thanks to the fact that the corresponding model settings information is dependent on the model settings region, for example its location and radio propagation conditions therein, the above mentioned object is achieved.

Advantageously, the signal strength value in at least one sub-region of the radio transmitter may be determined more accurately.

Further features of, and advantages with, embodiments herein will become apparent when studying the appended claims and the following description.

BRIEF DESCRIPTION OF THE DRAWINGS

The various aspects of embodiments herein, including its particular features and advantages, will be readily understood from the following detailed description and the accompanying drawings, in which:

Fig. 1 shows a schematic overview of an exemplifying communication system in which the present solution may be implemented,

Fig. 2 shows a schematic, combined signalling and flow chart of an embodiment of a method in the communication system of Fig. 1 for estimating a reserved region of a radio transmitter,

Fig. 3 shows a schematic flow chart of an embodiment of the method in the network node,

Fig. 4 shows a schematic block diagram of an embodiment of the arrangement in the network node,

Fig. 5 shows a schematic, simplified overview of a service area and an interference area of a primary and a secondary system, respectively,

Fig. 6 shows estimated and real service area and estimated and real interference area of the primary and secondary systems according to prior art, respectively,

Fig. 7 shows estimated and real service area and estimated and real interference area of the primary and secondary systems, when the estimated service area and the estimated interference area are obtained by an embodiment,

Fig. 8 shows an example of a plurality of sub-regions and a plurality of model settings regions,

Fig. 9 shows a graph for the probability distribution function of signal strength variations due to shadowing,

Fig. 10 shows different sub-regions in the vicinity of a radio transmitter,

Fig. 11 shows how to store model settings information in a database,

Fig. 12 shows an exemplifying embodiment in which an improved estimate of a reserved region is obtained,

Fig. 13 shows an exemplifying embodiment in which transmission parameters for a radio transmitter are estimated, and

Fig. 14 shows an exemplifying embodiment in which it is determined if a radio transmitter is allowed to transmit at a certain location.

DETAILED DESCRIPTION

Throughout the following description similar reference numerals have been used to denote similar elements, parts, items or features, when applicable.

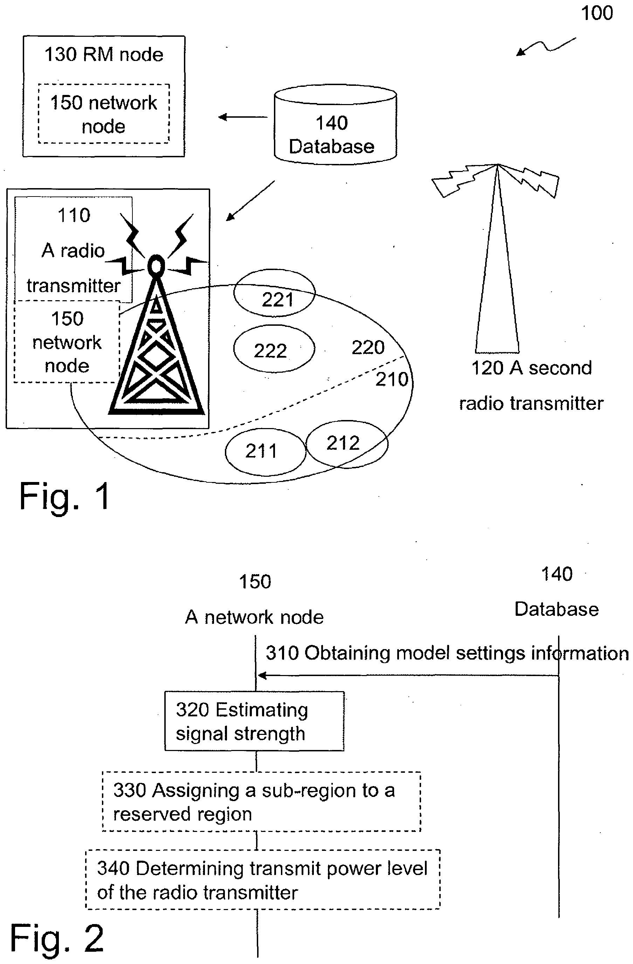

**Fig. 1** shows an exemplifying communication system 100 in which the present solution may be implemented. The communication system 100 may, for example, be a cellular radio communication system, a satellite communication system, a radar system or the like. Optionally, the communication system 100 comprises a radio transmitter 110 and a network node 150. The radio transmitter 110 is located at a radio transmitter location. The network node 150 has access to a database, which may be comprised in the radio transmitter 110 or the resource management network node 130. Alternatively, as shown in the Figure, the database may be comprised in a separate node 140. The database comprises model settings information about a plurality of model settings regions associated with the radio transmitter 110. The model settings regions are associated to the radio transmitter in that it may be expected that a signal strength value of a signal from the transmitter may be estimated and that such estimated signal strength value is not negligible. It is to be understood that the database may be implemented in many different ways as is known in the art. Optionally, the radio transmitter 110 or the resource management network node 130 comprises the network node 150. The radio transmitter 110 may be associated with a primary system and a second radio transmitter 120 may be associated with a secondary system or vice versa. It may be preferred to consider the radio transmitter 110 to be a primary transmitter when discussing the service area, whereas it may be preferred to consider the radio transmitter 110 to be a secondary transmitter when discussing the interference area.

Furthermore, the radio transmitter 110 is located in the vicinity of a plurality of sub-regions 211, 212, 221, 222. For each sub-region of said plurality of sub-regions a signal strength value, relating to a signal capable of being sent from the radio transmitter 110 to a virtual receiver located in one of the sub-regions, is to be determined as described below. The expression "virtual receiver" is meant to describe that there need not be a real receiver in the sub-region. A virtual receiver is the same as a potential receiver.

Now referring to **Fig. 2,** there is shown a combined signalling and flow chart of an exemplifying method in the communication system of Fig. 1 for estimating signal strength in at least one sub-region of a radio transmitter 110. Boxes drawn with a dashed line indicate optional steps. The following steps may be performed. The order of the steps 310-340 may differ from what is illustrated below or in the corresponding Figure for some embodiments of the method.

310 For each of said at least one sub-region, the network node 150 obtains, from the database corresponding model settings information, indicative of radio propagation conditions within one of said plurality of model settings regions. Said one of said plurality of model settings regions corresponds to said at least one sub-region in that said one of said plurality of model settings regions comprises at least a portion of said at least one sub-region. The model settings information is dependent on the model settings region. In more detail as an example, the network node 150 finds the model settings information for a sub-region by matching the location of the sub-region to a model settings region, comprising or at least partly comprising the sub-region. For this the size, location and/or shape of the model settings region(s) may need to be know to the network node 150. Then, by use of the data base the model setting information of the model settings region may be obtained.

320 For each of said at least one sub-region, the network node 150 estimates a corresponding signal strength value based on the radio transmitter location, the corresponding sub-region coordinate information and the model settings information. Preferably, the corresponding signal strength value is also based on a transmit power of the radio transmitter. The signal strength value relates to a signal capable of being sent from the radio transmitter 110 to a radio receiver located within said at least one sub-region. In this manner, the signal strength value in at least one sub-region of the radio transmitter may be determined more accurately as compared to prior art solutions described above.

330 Optionally, the network node 110, 130 assigns said at least one sub-region to a reserved region of said radio transmitter, if the signal strength value exceeds a first threshold value. The first threshold value is indicative of a desired service quality, which characterizes the reserved region. As a result, the reserved region comprises one or more sub-regions. In other words, the reserved region is built up by a number of sub-regions. Thus, when a sub-region is assigned to the reserved region, the sub-region is added to the sub-regions that constitutes the reserved region. It may be preferred that the first threshold value includes some additional margin to ensure that the desired service quality may be maintained. In this step, it may be preferred that the radio transmitter is a primary transmitter and the reserved region is a service area (of the primary system), possibly including some margin. Advantageously, the reserved region of the radio transmitter may be estimated more accurately as compared to prior art solution. Hence, there is an increase of available spectrum resource for secondary systems and, accordingly, white space capacity available for secondary systems is increased as well. As a result, the spectrum, i.e. radio spectrum resources, may be used more efficiently. Compared to the sensing procedure, the method illustrated above is easier to put into practice, since a very large amount of sensors is not required.

340 Optionally, the network node 110, 130 determines a transmit power level of the radio transmitter such that the signal strength value in each of said at least one sub-region is less than a second threshold value. The second threshold value is indicative of a tolerable interference power level caused by said radio transmitter in said at least one sub-region. It may be preferred that the second threshold value includes some margin to ensure that the tolerable interference power level is not exceeded. Furthermore, it may be preferred that the radio transmitter is a secondary transmitter. In this manner, the transmit power level of, for example, a secondary transmitter may be determined more accurately, whereby a greater portion of the available spectrum resources may be used as compared to prior art solutions, and whereby higher transmit power levels can be used as compared to prior art solutions, which yields higher capacity. Advantageously, the entire reserved region need not be estimated, instead an allowed transmit power level for the radio transmitter is estimated.

In the following a number of terms used herein will be briefly explained.

A sub-region is a portion of a region in which a signal strength value of a signal from the radio transmitter may be estimated or measured. Notably, the region and the sub-region may be three dimensional. This may be applicable, for example, if it is desired to estimate (or measure) signal strength values around a satellite transmitter. The sub-region is, for example, used when determining signal strength values relating to the radio transmitter in that only one signal strength value is estimated for the sub-region. Hence, the estimated signal strength value will be used to determine, for example, if the sub-region is to be included in the reserved area of the radio transmitter. As another example, the estimated signal strength value may be used to determine an allowed transmit power level of the transmitter.

Sub-region coordinate information defines the location, shape and/or size of a sub-region.

A model settings region may comprise at least a portion (or portions) of one or more sub-regions. It may be preferred that the model settings region comprises one or more sub-regions. In embodiments, when a model settings region comprises only one sub-region (and in some cases is the same as the sub-region), the amount of data that needs to be stored in the database is larger than in embodiments in which the model settings region comprises at least two sub-regions.

Model settings information may comprise a model type, such as a propagation model or a type of path loss model, and/or a set of model parameter values applicable to a model type as specified by the model settings information or as specified by a predetermined model type, e.g. a default model type that possibly has been selected in advance.

A model type, hence, define a set of model parameters, for example, as described in conjunction with equation (5). Therefore, when specifying a model type, it may be necessary to also specify what values, i.e. model parameter values, the model parameters of the model type may be set to. Normally, by specifying a model type also a set of model parameters for use in the model type are specified. It shall also be understood that the model settings information may comprise information about location, size and shape of a model settings region.

Model type herein denotes a model that depends on a number of model parameters, potentially including additional margins. The equation (5) or a table describing a propagation model are examples of different model types. Other equations may also be used. To determine the pathloss the model settings information, such as a model type (possibly predetermined, see above) and, if applicable, appropriate model parameter values, need to be known.

It is to be noted that the reserved region may be a service area or an interference area. Optionally, the reserved region also comprises a margin, whereby the reserved region becomes larger than the service area or the interference area. In this case, the reserved region may be referred to as a protection zone.

The service area is the area around the radio transmitter in which a service provided by the radio transmitter is available at a given service quality. Moreover, the service area may be defined by a minimum signal-to-noise ratio (SNR) or a minimum power level for signals in the transmission(s) from the radio transmitter, thereby assuring the given service quality. For example, if a certain noise power, N, is assumed, the first threshold T1 may be set such that the minimum SNR (possibly plus some margin) is fulfilled within the service area. The certain noise power N may originate from general background noise. This may be expressed as T1 = SNR * N (+ margin). Hence, when the estimated corresponding signal strength value exceeds the first threshold T1, the associated sub-region is to be assigned to the reserved region.

The interference area is the area around the radio transmitter 110 in which interference from the radio transmitter 110 to the receivers associated to the second radio transmitter 120, such as a primary transmitter, is too large with respect to some threshold level, which may be selected with respect to the receivers associated to the second radio transmitter 120. In more detail, the interference area may be defined by an interference robustness of the receivers associated to the second radio transmitter 120. The interference robustness may be defined as a maximum interference power that the receivers associated to the radio second transmitter 120 may tolerate without significant degradation of quality of service. The second threshold T2 may, thus, be set to an acceptable (or tolerable) power level of the receivers associated to second radio transmitter 120 (i.e. interference level to the primary system), whereby interference from the secondary system and general background noise is kept below the maximum interference power. Notably, an increase of the transmission power of the secondary system increases the noise power N.

Both the interference area and the service area are generally determined by means of a radio propagation model with a certain set of model parameters, which may be set to certain model parameter values. In real networks, the radio propagation conditions largely depend on the terrain, i.e. topography of an area, over which the signal is transmitted. As an example, a signal is more strongly attenuated over distance in an urban area than in an open rural area. Moreover, in an urban area a larger variation of signal attenuation due to shadowing, i.e. by buildings located in or at the propagation path of the signal, may be expected. In addition, different propagation models may need to be employed for different terrains, such as urban and open rural areas, in order to predict signal strength at a particular area. The different propagation models are referred to as model types. For determining the service area of the primary system and the interference area of a secondary system a single radio propagation model is used with a conservative set of model parameter values (the set of parameters may comprise only one parameter). The reason is that when no knowledge about the best suited propagation model (or model type) and the best suited set of model parameter values, a conservative parameter setting, i.e. the choice of model type and model parameter values, ensure protection of the primary system performance, even in a worst case scenario. This results in sometimes unnecessarily large interference and service areas.

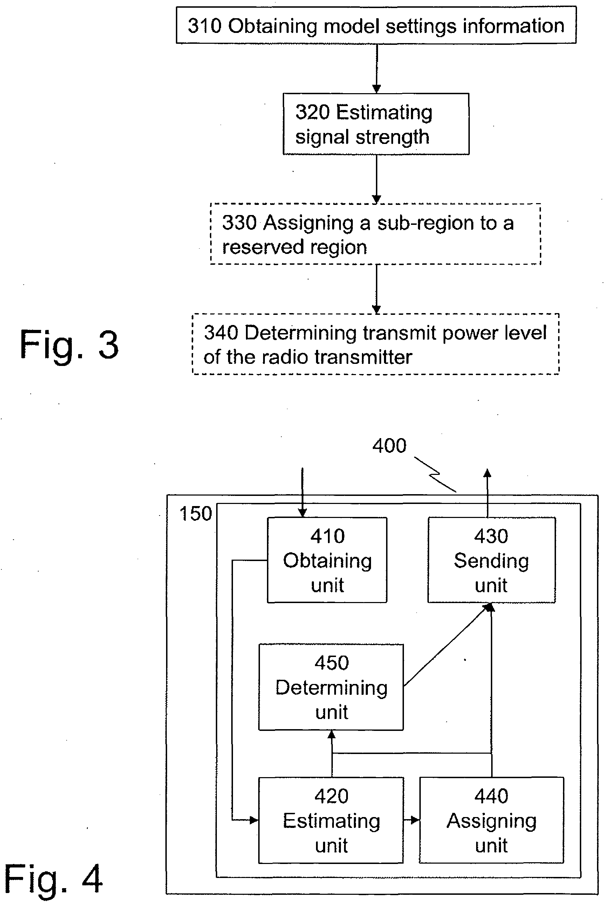

Fig. 3 shows a schematic flow chart of an embodiment of the method in the network node 150 for estimating signal strength in at least one sub-region of a radio transmitter 110, located at a radio transmitter location. Each of said at least one sub-region is identified by corresponding sub-region coordinate information. The network node 110, 130, 150 has access to a database, comprising model settings information about a plurality of model settings regions associated with the radio transmitter 110. The following steps may be performed. The order of the steps may differ from what is illustrated below or in the corresponding Figure for some embodiments of the method. Boxes drawn with a dashed line indicate optional steps.

310 For each of said at least one sub-region, the network node 110, 130 obtains, from the database corresponding model settings information, indicative of radio propagation conditions within one of said plurality of model settings regions. Said one of said plurality of model settings regions corresponds to said at least one sub-region in that said one of said plurality of model settings regions comprises at least a portion of said at least one sub-region. The model settings information is dependent on the model settings region. In an embodiment of the method, the model settings information is dependent on which model settings region it is associated to, since radio propagation conditions for different model settings regions may be different. The difference in radio propagation conditions may depend on the distance between the radio transmitter and the (geographical) location of the model settings region and/or the topographical conditions in the model settings region.

320 For each of said at least one sub-region, the network node 110, 130 estimates a corresponding signal strength value based on the radio transmitter location, the corresponding sub-region coordinate information and the model settings information. Preferably, the corresponding signal strength value is also based on a transmit power of the radio transmitter. The signal strength value relates to a signal capable of being sent from the radio transmitter 110 to a radio receiver located within said at least one sub-region. Advantageously, the signal strength value in at least one sub-region of the radio transmitter may be determined more accurately as compared to prior art solutions described above.

330 Optionally, the network node 110, 130 assigns said at least one sub-region to a reserved region of said radio transmitter, if the signal strength value exceeds a first threshold value. The first threshold value is indicative of a desired service quality, which characterizes the service area. As a result, the reserved region comprises one or more sub-regions. In other words, the reserved region is built up by a number of sub-regions. Thus, when a sub-region is assigned to the reserved region, the sub-region is added to the sub-regions that constitutes the reserved region. Advantageously, the reserved region of the radio transmitter may be estimated more accurately by the manner described herein as compared to prior art solution. Hence, there is an increase of spectrum opportunities for secondary systems and, accordingly, white space capacity available for secondary systems is increased as well. As a result, the spectrum, i.e. radio spectrum resources, may be used more efficiently. Compared to the sensing procedure, the method illustrated above is easier to put into practice, since a very large amount of sensors is not required.

340 Optionally, the network node 110, 130 determines a transmit power level of the radio transmitter such that the signal strength value in each of said at least one sub-region is less than a second threshold value. The second threshold value is indicative of an interference power level caused by said radio transmitter in said at least one sub-region. It may be preferred that the radio transmitter is a secondary transmitter. In this manner, the transmit power level of, for example, a secondary transmitter may be determined more accurately, whereby a greater portion of the available spectrum resources may be used as compared to prior art solutions, and whereby higher transmit power levels can be used as compared to prior art solutions, which yields higher capacity. Advantageously, the entire reserved region need not be estimated, instead an allowed transmit power level for the radio transmitter is estimated.

In some embodiments of the method in the network node 110, 130, the determination of a transmit power level, i.e. the step 340, is performed for at least one radio beam pattern of the radio transmitter 110 out of a plurality of radio beam patterns of said radio transmitter 110. As known in the art, a radio transmitter may be configured to be able to transmit different radio beam patterns, also referred to as antenna beam patterns, by using, for example, a microstrip antenna or an antenna array. The term radio beam pattern refers to the fact that the radiation from, for example, a microstrip antenna has a directional dependence. Hence, the determined transmit power level may be different for different radio beam patterns of the radio transmitter 110, such as a secondary system. For example, the determined transmit power level, when the radio transmitter 110 is configured to transmit a first radio beam pattern, may be greater than the determined transmit power level, when the radio transmitter 110 is configured to transmit a second radio beam pattern.

In some embodiments of the method in the network node 110, 130, said at least one sub-region comprises at least a first and a second sub-region.

In some embodiments of the method in the network node 110, 130, the plurality of model settings regions comprises at least a first and a second model settings region, comprising at least the first and second sub-regions, respectively. Model settings information, which is dependent on the first model settings region, may be different from model settings information, which is dependent on the second model settings region. For example, model settings information for (i.e. which is dependent on) the first model settings region may be different from model settings information for (i.e. which is dependent on) a second model settings region, because the topographical conditions in the first and second model settings regions are different. The model settings information that may differ for different model settings regions may be, for example, the model type and/or one or more of the model parameter values as described in conjunction with equation (5).

In addition, in some cases the distance from the radio transmitter to the corresponding model settings regions may be different. As a consequence, the radio propagation conditions (or radio propagation properties) for the first and second model settings region may be different.

In some embodiments of the method in the network node 110, 130, the model settings information is based on fitting signal strength values, indicative of signal strength in at least some sub-regions. The at least some sub-regions are comprised in the model settings region corresponding to the model settings information. In other words, the model settings information is adapted to, or expressed differently fitted to, the fitting signal strength values such that when applying the model settings information the signal strength values, derived from the model settings information, are matched close to the fitting signal strength values.

In some embodiments of the method in the network node 110, 130, the fitting signal strength values are based on measurements or high-precision estimates of the signal strength. For example, fifty sub-regions may be comprised in three model settings regions. Then, the fitting signal strength value in five sub-regions comprised in one of the three model settings regions may be determined very accurately be means of measurements or some kind of high-precision modelling. Next, the model settings information for the corresponding model settings region may be determined based on these five very accurately determined fitting signal strength values. For example, minimum least square error fitting procedures as known in the art may be applied.

In some embodiments of the method in the network node 110, the model settings information comprises one or more of model type and model parameter values. When only model parameter values are different for different sub-regions, an advantage may be that less information needs to be sent over the network. Similarly, when only model type is different for different sub-regions, an advantage may be that less information needs to be sent over the network.

In some embodiments of the method in the network node 150, the network node 150 is comprised in the radio transmitter 110 or a radio resource management node 130. When the network node is comprised in the radio transmitter, a more decentralized solution is obtained. As a result, most of the processing is performed locally and there will be less signalling in the network. In contrast, when the network node is comprised in a radio resource management node a more centralized solution is obtained. In this case, the processing may be performed in a central node dedicated to the task of the required processing. As a result, there will be more signalling, but such solution allows for more control (by e.g. a regulator) such that processing is harder to manipulate.

In some embodiments of the method in the network node 150, the network node 150 comprises the database. Since the database is comprised in the network node 150, the signalling may become faster. For example, when the database is an internal module of the network node 150, it is possible to make use of internal data-buses for passing information from the database to a processing unit within the network node 150.

In some embodiments of the method in the network node 150, the sub-region coordinate information comprises information indicative of area and/or position of the sub-region. For example, geographical coordinates (x1..xN, y1..yN) specifying the shape of the sub-region may be provided. In some embodiments, a parameter value, such as the length of a side of the sub-region if it is, for instance, a square, and a position of such square may be provided.

Now with reference to Fig. 4, there is shown a schematic block diagram of an embodiment of the arrangement 400 in the network node 150 for estimating a signal strength, in at least one sub-region of a radio transmitter 110, located at a radio transmitter location. Each of said at least one sub-region is identified by corresponding sub-region coordinate information. The network node 110, 130, 150 has access to a database, comprising model settings information about a plurality of model settings regions associated with the radio transmitter 110. The arrangement 400 may comprise an obtaining unit 410 configured to, for each of said at least one sub-region, obtain, from the database corresponding model settings information, indicative of radio propagation conditions within one of said plurality of model settings regions. Said one of said plurality of model settings regions corresponds to said at least one sub-region in that said one of said plurality of model settings regions comprises at least a portion of said at least one sub-region. The model settings information is dependent on the model settings region. The arrangement 400 may further comprise an estimating unit 420 configured to, for each of said at least one sub-region, estimate a corresponding signal strength value based on the radio transmitter location, the corresponding sub-region coordinate information and the model settings information. Preferably, the corresponding signal strength value is also based on a transmit power of the radio transmitter. The signal strength value relates to a signal capable of being sent from the radio transmitter 110 to a radio receiver located within said at least one sub-region. Optionally, the arrangement 400 may comprise a sending unit 430 for sending the estimated signal strength value to another node for further processing. Optionally, the arrangement 400 may further comprise a memory (not shown) on which a computer program product configured to execute the embodiments of the method disclosed herein may be stored.

Advantageously, the signal strength value in at least one sub-region of the radio transmitter may be determined more accurately as compared to prior art solutions discussed above.

In some embodiments of the arrangement 400 in the network node 110, 130, the arrangement 400 further comprises an assigning unit 440 configured to assign said at least one sub-region to a reserved region of said radio transmitter, if the signal strength value exceeds a first threshold value. The first threshold value is indicative of a desired service quality, which characterizes the service area. Advantageously, the reserved region of the radio transmitter may be estimated more accurately as compared to prior art solutions. Hence, there is an increase of spectrum opportunities for secondary systems and, accordingly, white space capacity available for secondary systems is increased as well. Compared to the sensing procedure the method illustrated above is easier to put into practice.

In some embodiments of the arrangement 400 in the network node 110, 130, 150, the arrangement 400 further comprises a determining unit 450 configured to determine a transmit power level of the radio transmitter such that the signal strength value in each of said at least one sub-region is less than a second threshold value. The second threshold value is indicative of an interference power level caused by said radio transmitter in said at least one sub-region. It may be preferred that the radio transmitter is a secondary system. In this manner, the transmit power level of, for example, a secondary system may be determined more accurately, whereby a greater portion of the available spectrum resources may be used as compared to prior art solutions, and whereby higher transmit power levels can be used as compared to prior art solutions, which yields higher capacity. Advantageously, the entire reserved region need not be estimated, instead an allowed power level for the radio transmitter is estimated.

In some embodiments of the arrangement 400 in the network node 110, 130, the determining unit 450 is configured to perform the determination of a transmit power level for at least one radio beam pattern of the radio transmitter 110 out of a plurality of radio beam patterns of said radio transmitter 110.

In some embodiments of the arrangement 400 in the network node 110, 130, said at least one sub-region comprises at least a first and a second sub-region.

In some embodiments of the arrangement 400 in the network node 110, 130, the plurality of model settings regions comprises at least a first and a second model settings region, comprising said at least a first and a second sub-region, respectively. The model settings information, dependent on the first model settings region, is different from the model settings information, dependent on the second model settings region. For example, the model settings information for a first model settings region may be different from the model settings information for a second model settings region, because the topographical conditions in the first and second model settings regions are different. The model settings information that may differ for different model settings regions can be, for example, the type of pathloss model, the distance-dependent pathloss exponents, the component modelling, the shadowing variations, the fast fading characteristics, or the correlation of model components and/or values over distance or frequencies. In addition, in some cases the distance from the radio transmitter to the corresponding model settings regions may be different. As a consequence, the radio propagation conditions for the first and second model settings region may be different.

In some embodiments of the arrangement 400 in the network node 110, 130, the model settings information is based on fitting signal strength values, indicative of signal strength in at least some sub-regions. The at least some sub-regions are comprised in the model settings region corresponding to the model settings information. In other words, the model settings information is adapted to the fitting signal strength values such that when applying the model settings information the signal strength values, derived from the model settings information, are matched close/ near /in the vicinity of to the fitting signal strength values.

In some embodiments of the arrangement 400 in the network node 110, 130, the fitting signal strength values are based on measurements or high-precision estimates of the signal strength. For example, fifty sub-regions may be comprised in three model settings regions. Then, the fitting signal strength value in five sub-regions comprised in one of the three model settings regions may be determined very accurately be means of measurements or some kind of high-precision modelling. Next, the model settings information for the corresponding model settings region may be determined based on these five very accurately determined fitting signal strength values. For example, minimum least square error fitting procedures as known in the art may be applied.

In some embodiments of the arrangement 400 in the network node 110, the model settings information comprises one or more of model type and model parameter values. When only model parameter values are different for different sub-regions, then an advantage may be that less information needs to be sent over the network. Similarly, when only model type is different for different sub-regions, then an advantage may be that less information needs to be sent over the network.

In some embodiments of the arrangement 400 in the network node 150, the network node 150 is comprised in the radio transmitter 110 or a radio resource management node 130. When the network node is comprised in the radio transmitter, a more decentralized solution is obtained. As a result, most of the processing is performed locally and there will be less signalling in the network. In contrast, when the network node is comprised in a radio resource management node a more centralized solution is obtained. In this case, the processing may be performed in a central node dedicated to the task of the required processing. As a result, there will be more signalling, but such solution allows for more control (by e.g. a regulator) such that processing is harder to manipulate.

In some embodiments of the arrangement 400 in the network node 150, the network node 150 comprises the database. Since the database is comprised in the network node 150, the signalling between the network node 150 may become faster. For example, when the database is an internal module of the network node 150, it is possible to make use of internal data-buses for passing information from the database to a processing unit within the network node 150.

In some embodiments of the arrangement 400 in the network node 150, the sub-region coordinate information comprises information indicative of area and/or position of the sub-region. For example, geographical coordinates (x1..xN, y1..yN), specifying the shape of the sub-region, may be provided. In some embodiments, a parameter value, such as the length of a side of the sub-region if it is, for instance, a square, and a position of such square may be provided.

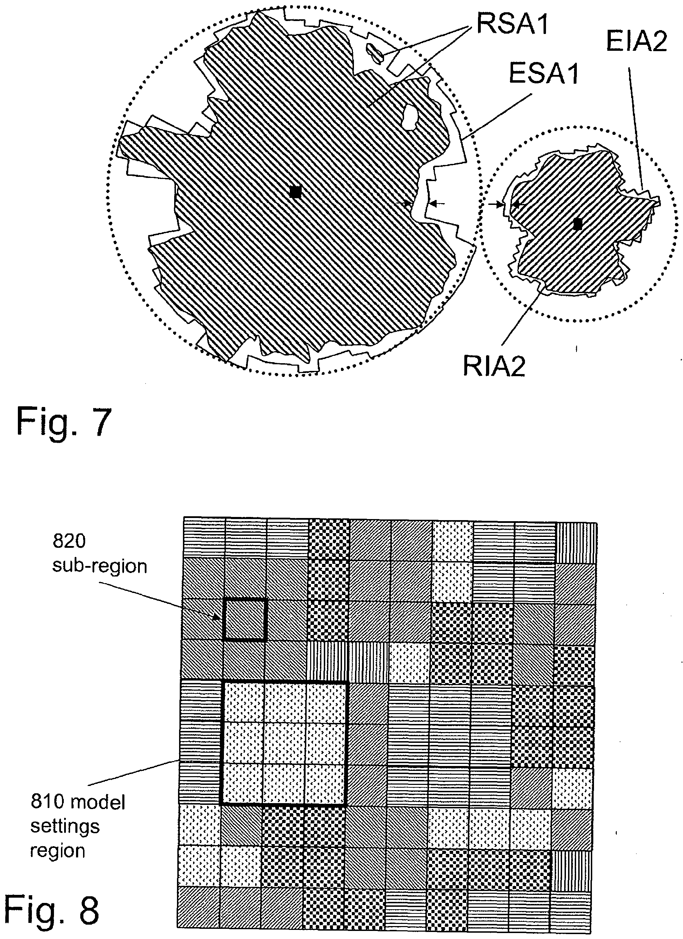

**Fig. 7** shows estimated and real service area ESA1, RSA1, and estimated and real interference area EIA2, RIA2, of the primary and secondary systems, respectively, when the estimated service area and the estimated interference area are estimated by a method according embodiments herein. From the Figure, it may be seen that the margin, as indicated by the arrows, at the primary system and the secondary system may be much smaller than in prior art solutions.

**Fig. 8** shows a plurality of sub-regions 820 and a plurality of model settings regions. A model settings region, indicated by reference numeral 810, comprises at least one sub-region 820, preferably a plurality of sub-regions 820. It is to be understood that other shapes than squares, such as triangles, rectangles, pentagons, hexagons and more, also irregular shapes, may be used for the sub-regions. In addition, the shape of a sub-region may be a combination of the aforementioned shapes. It shall also be noted that in some embodiments, some sub-regions may be, for example, triangles and some other sub-regions may be, for example, pentagons. Thus, all sub-regions must not have the same shape or the same size (or area). Instead a mixture of shapes or sizes may be used. A further example is to mix sub-regions of the shapes triangle, pentagon and hexagon. The above about shapes of sub-regions is also applicable to shapes of the model settings region.

In another embodiment, there is provided a method in the network node 150 for estimating a reserved region of a radio transmitter 110 located at a radio transmitter location. The network node 150 has access to a database, comprising information about a plurality of sub-regions associated with the radio transmitter 110. Optionally, the communication system 100 comprises the network node 150 and the radio transmitter 110. The following steps may be performed.

The network node 110 obtains, for at least one sub-region of said plurality of sub-regions, from the database, corresponding sub-region coordinate information and corresponding model settings information for estimating a signal strength value within said at least one sub-region. The model settings information is dependent on the sub-region coordinate information. Thus, for different sub-regions different model settings information may be applied. For example, the model settings information for one sub-region is different from the model settings information for another sub-region, because the sub-regions have different locations (and, thus, radio propagation conditions differ as well). Notably, for some other sub-regions the same model settings information may be applied. The signal strength value relates to a signal capable of being sent from the radio transmitter 110 to a radio receiver (not shown) located within said at least one sub-region. Compare with step 310.

The network node 110 estimates, for said at least one sub-region, the signal strength value based on the radio transmitter location, the corresponding sub-region coordinate information and the corresponding model settings information. Hence, different model settings information may be applied for different sub-regions, i.e. locations. Compare with step 320.

Optionally, the network node 110 assigns said at least one sub-region to the reserved region, when the signal strength value exceeds a first threshold value for indicating signal strength conditions of said at least one sub-region. Optionally, the threshold may be based on desired service quality for the radio transmitter in case a service area is to be estimated or an acceptable power level from the radio transmitter in case an interference area is to be estimated. Compare with step 330.

As a result, the reserved region may be estimated more accurately compared to prior art solutions. Compared to the sensing procedure the method illustrated above is easier to put into practice. Moreover, the spectrum may be used more efficiently, while not wasting capacity due to an unnecessarily large estimation of the reserved region. Since the present method improves accuracy in the determination of the reserved region, the determined reserved region may be smaller than in prior art solutions. Further, in conjunction with this embodiment, said at least one sub-region may optionally be comprised in model settings regions, defining a set of sub-regions in which the same model settings information are applied. In this manner, less information needs to be stored in the database and possibly sent to the network node when the same model settings information may be applied for many sub-regions for each of which a signal strength value is to be estimated. This is further illustrated in Fig. 8 as above, which shows a plurality of sub-regions 820, indicated as squares. This embodiment may also be used to determine (compare with step 340) a transmit power level of the radio transmitter such that the estimated corresponding signal strength value in each of said at least one sub-region 211, 212, 221, 222 is less than a second threshold value.

In the following, it is further elaborated how some embodiments may be implemented. For clarity, the expressions "service area" and "interference area" has been used as appropriate, instead of the expression "reserved region".

In a primary system, the service area may be determined by the area comprising the receiver locations where at least a minimum link quality is achieved:

$$\frac{P_1 \cdot G_{11}(x_{1T}, x_{1R})}{N_1} \geq \gamma_{1\min}, \qquad (1)$$

where $P_1$ is the transmit power of the primary transmitter, $G_{11}$ is the channel gain, including antenna gains, from the primary transmitter to a primary receiver, the transmitter position vector is $x_{1T}$ and the receiver position vector is $x_{1R}$, $N_1$ is the noise power, such as thermal noise, at the receiver and $\gamma_{1\min}$ is the minimum required SINR of the primary receiver.

When a secondary system is active in an overlapping frequency assignment, the signal quality at a primary receiver is degraded to:

$$\frac{P_1 \cdot G_{11}(x_{1T}, x_{1R})}{N_1 + P_2 \cdot G_{21}(x_{2T}, x_{1R})},$$

where $P_2$ is the power of the secondary transmitter (within the frequency range used by the primary system) and $G_{21}(x_{2T}, x_{1R})$ is a channel gain, including antenna gains, from the secondary transmitter to a primary receiver where the secondary transmitter position vector is $x_{2T}$. When secondary usage of spectrum with primary systems is allowed, it is typically required that the degradation of the signal quality for a primary receiver caused by the secondary usage stays below a maximum value $\gamma_{1loss}$. The reserved region for a primary system is then the area where secondary transmission is prohibited. It is defined as all locations for which, if a secondary transmitter was transmitting:

$$\frac{P_1 \cdot G_{11}(x_{1T}, x_{1R})}{N_1 + P_2 \cdot G_{21}(x_{2T}, x_{1R})} \leq \frac{\gamma_{1\min}}{\gamma_{1loss}}, \qquad\qquad (2)$$

would be fulfilled for any primary receiver located within the primary service area. For simplicity this is often only validated for the primary receivers at the service area contour, i.e. at the border of the service area.

Any secondary transmitter transmitting with or below power $P_2$ located outside the reserved region will not degrade the primary signal quality by more than $\gamma_{1loss}$. Assuming that that in the worst case the equality in (1) holds ($P_1{}^*G_{11}/N_1 = \gamma_{1\min}$), the edge of the reserved region is achieved (with equality in (2)) when:

$$\gamma_{1loss} = \frac{N_1 + P_2 \cdot G_{21}(x_{2T}, x_{1R})}{N_1}$$
$$= \frac{N_1 + I_{2\max}}{N_1} \qquad\qquad (3)$$

The maximum interference $I_{2\max}$ that may thus be permitted to be caused by a secondary transmitter to a primary receiver is:

$$I_{2\max} = P_2 \cdot G_{21}(x_{2T}, x_{1R}) = \gamma_{1loss} \cdot N_1 - N_1. \qquad (4)$$

Typically, the channel gains $G_{11}$ and $G_{21}$ are determined by a fixed propagation model, which is often of the form (expressed in dB):

$$G_{dB} = G_{antennas} + c + e \cdot \log_{10} \|x\| + Ms + Mm + Mp, \qquad (5)$$

In equation (5) the following model parameters may be identified:

$G_{antennas}$ corresponds to the expected antenna gains at transmitter and receiver,
$c$ is an expected propagation constant,
$e$ is an expected distance-dependent pathloss exponent (the exponent corresponds to a multiplier in dB form) when transmitter and receiver are separated by vector $x$,
$Ms$ is a margin to compensate variations of shadowing,
$Mm$ is a margin to compensate variations of multi-path fading, and
$Mp$ is an additional protection margin to take into account uncertainties.

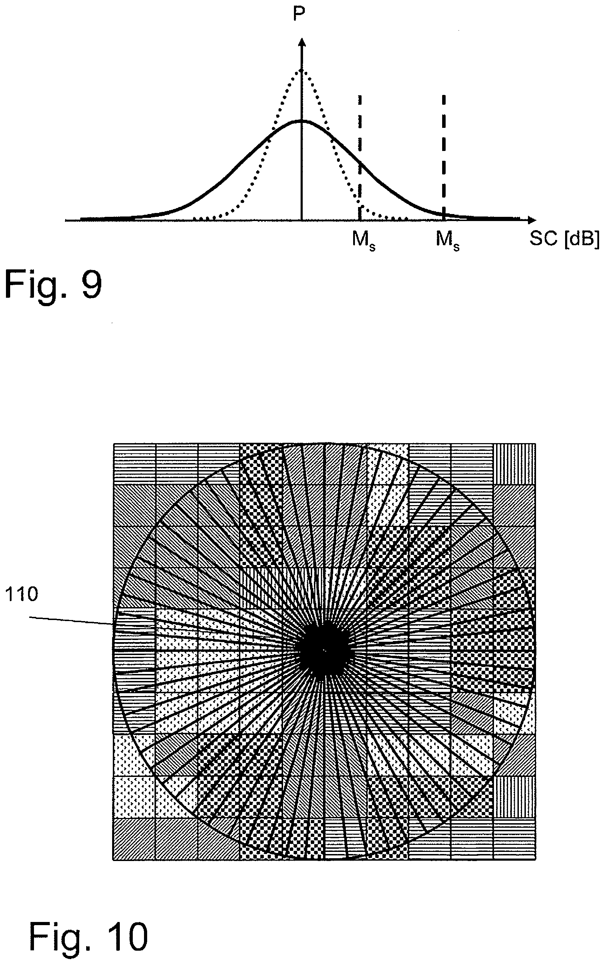

The terms "Ms", "Mm" "Mp" in equation (5) describe a margin for uncertainties of random variations. Shadowing (related to Ms) is typically following a log-normal distribution with a certain variance, which may vary for different model settings regions, see **Fig. 9**. The margin Ms could, e.g., represent the value that is exceeded with a probability of 5% values according to the log-normal shadowing model. Fig. 9 gives two different margins Ms for two assumed shadowing distributions with different variances.

It is similar for multipath fading (related to Mm), which is typically expected to follow either Rayleigh, Ricean or Nakagami-m distributions. Depending on the assumed distribution and a certain value of certainty (e.g., 95%) that the variation does not exceed a certain threshold a corresponding margin for Mm can be determined (or it can be simply a fixed number determined in best-practice experience).

Mp does not represent any specific variation, so it may model any further artefacts. Thus, Mp may be seen as a safety margin or the like.

The model type shown in equation (5) is merely an example, other model types (propagation models) may also be used. E.g. multi-slope models, where the constant c and exponent e have a particular value if $0<x<=a$, and another value for $a<x<=b$, and so on, where a, b are certain distances between transmitter and receiver. Thus, the model type identifies which pathloss model is to be applied for determining the signal strength in a sub-region comprised at least partly in a model settings region.

For other model types other model parameters may be identified. For example, the shadowing variations (also present in equation (5) in the form of shadowing variance), which may vary over distance or frequency,

the fast fading characteristics refer to the rate at which magnitude and phase of a signal changes,

the correlation of model components and/or values over distance or frequencies.

Firstly, discussing correlation of model components/values over distance, if at a certain location a shadowing value is determined, there is a correlation to the shadowing value at a nearby location (although shadowing values are overall following e.g. a log-normal distribution). E.g. one location is hidden behind a house and sees strong shadowing. A location some 20m away typically sees a similar / correlated shadowing value for the same transmitter. A location 500 m away may have a completely unrelated value (uncorrelated). One way to describe this is a distance value between neighbouring locations from which the correlation between the shadowing values is below a correlation threshold. Thus, correlation over distance relates to how much a value measured at one point tells about a value that is to be measured at another nearby location.

Secondly, discussing correlation of model components/values over frequency, e.g. a shadowing value (or shadowing variance in the model) for a frequency 2GHz is measured. Then, if a correlation model is known, this measurement may be used to determine a shadowing value for another frequency band, e.g. at 500 MHz. Thus, correlation over frequency relates to how much a value measured at one frequency tells about a value that is to be measured at another frequency.

In prior art, when $G_{11}$ and $G_{21}$ are determined conservatively large values of the protection margins, e.g., Ms, Mm and Mp in (5), are assumed. The reasoning behind this is to assure primary system protection. This leads to very large protection zones and hence reduced spectrum opportunities. However, the parameters in (5) depend on distance between the transmitter and the receiver, denoted $\|x\|$, as well as topographic features on the transmission path between the transmitter and the receiver.

According to embodiments, an idea is to use for every relevant radio receiver and radio transmitter location a model type with a selection of model parameter values thereto, where the model type and the selection of model parameter values are chosen while taking into account the location of the radio transmitter and the topographical conditions. For example, shadowing can depend on the amount of obstruction (due to for example buildings) on the signal path between the radio transmitter and the receiver. It exhibits typically local variations which are lognormal distributed, but the variance of the distribution depends on the topography. If a large variance of shadowing is assumed this results in a large margin *M*s, although in several locations the variance of shadowing may be much smaller - and thus a smaller *M*s could be used (see Fig. 9). Similarly, the propagation constant, c, and propagation exponent, x, depend on the terrain and elevation of antennas at the radio transmitter and the receiver. The multipath component depends on delay spread and power profile of the channel, which primarily depends on how many reflectors, such as buildings, and scatterers, such as buildings, are present around the receiver and how dominant these reflectors and scatterers are. It also depends on the bandwidth of the signal for which it is determined. Similarly, the model type may differ depending on the transmitter-receiver locations (e.g. a model type for urban canyons or roof-top propagation).

**Fig. 10** shows the radio transmitter 110 located in the centre of a map comprising different sub-regions, which are indicated by squares, having varying structure to denote that different model settings information is applicable for sub-regions having different structure. When signal strength at a receiver location is to be estimated, the receiver location is mapped to the sub-region in which the receiver is located.

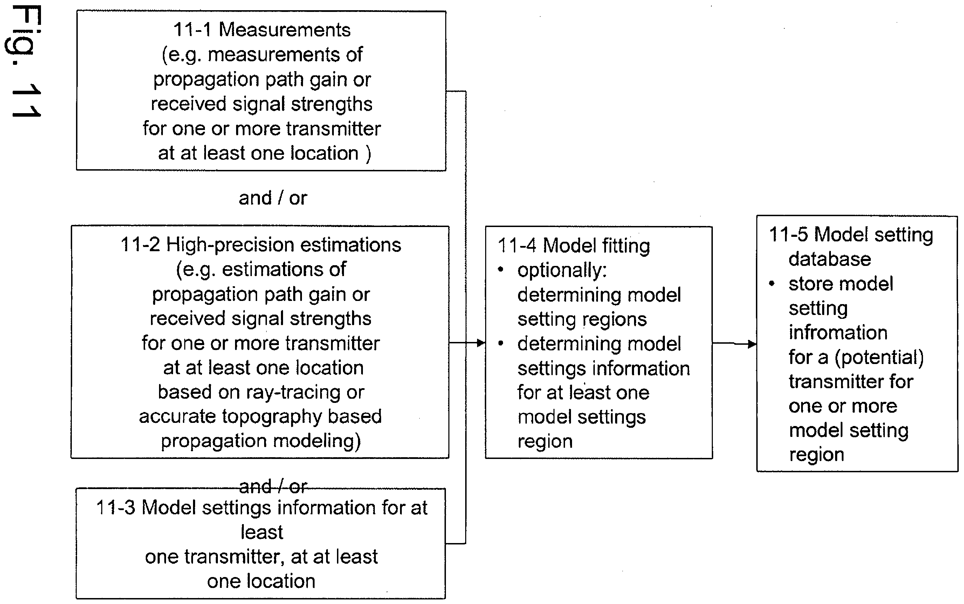

**Fig. 11** shows how to store model settings information in the database. The following steps may be performed. In some embodiments, the order of the steps may differ from what is presented below or in Fig. 11.

In a step 11-1, measurements (e.g. measurements of propagation path gain or received signal strengths for one or more transmitters at at least one' location) are performed.

In a step 11-2, high-precision estimations are made (e.g. estimations of propagation path gain or received signal strengths for one or more transmitter at 'at least one' location based on ray-tracing or accurate topography based propagation modeling).

In a step 11-3, model settings information for at least one transmitter at 'at least one' location are obtained.

Notably, at least one of the steps 11-1, 11-2 and 11-3 is performed.

In a further step 11-4, model fitting is performed. Optionally, the model settings regions are determined. Model fitting is performed by determining model settings information for at least one model settings region.

In a step 11-5, the database, shown as a model settings database in the Figure, is populated by storing model settings information associated with one or more model settings regions.

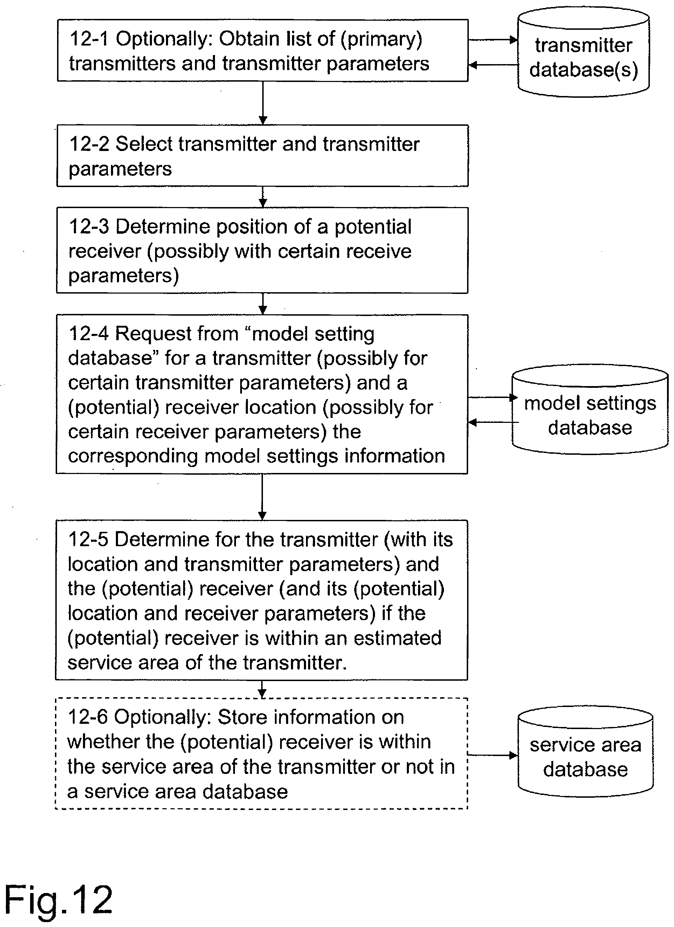

**Fig. 12** shows an exemplifying embodiment in which an improved estimate of a reserved region is obtained,

In an optional step 12-1, a list of (primary) transmitters and transmitter parameters and associated values is obtained from, for example, a transmitter database comprising information about the list.

In a step 12-2, radio transmitter and radio transmitter parameters and associated values, such as transmit power, radio beam pattern and more, are selected.

In a step 12-3, a position of a receiver (possibly with certain receive parameters and associated values) is selected or determined. Here the position at which the signal strength is to be estimated is selected.

In a step 12-4, the model settings information corresponding to a transmitter (possibly for certain transmitter parameters) and a receiver location (possibly for certain receiver parameters) are requested from the database comprising model settings information.

In a step 12-5, it is determined for the transmitter (with its location and transmitter parameters) and the receiver (and its location and receiver parameters) if the receiver is within an estimated service area of the transmitter.

In an optional step 12-6, the information on whether the receiver is within the service area of the transmitter or not is stored in a service area database comprising information about size, location and/or shape of the service area.

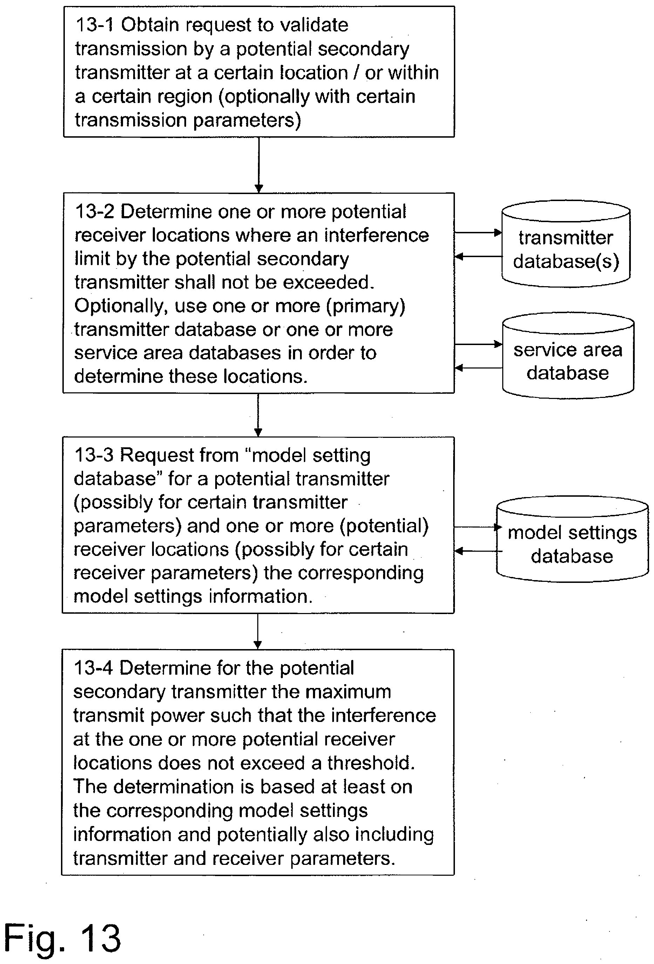

**Fig. 13** shows an exemplifying embodiment in which transmission parameters for a radio transmitter are estimated. This can be done for one or more channels.

In a step 13-1, a request to validate transmission by a secondary transmitter at a certain location / or within a certain region (optionally with certain transmission parameters) is obtained.

In a step 13-2, one or more possibly potential (primary) receiver locations, where an interference limit by the secondary transmitter shall not be exceeded, are determined. Optionally, one or more (primary) transmitter databases or one or more service area databases are used in order to determine these locations. A potential receiver location is a location where a receiver may be located, but a real receiver is not necessarily located at such potential location.

In a step 13-3, the corresponding model settings information is requested from the database comprising model settings information for a transmitter (possibly for certain transmitter parameters) and one or more receiver locations (possibly for certain receiver parameters).

In a step 13-4, the maximum transmit power for the secondary transmitter is determined such that the interference at the one or more receiver locations does not exceed a threshold. The determination is based at least on the corresponding model settings information and optionally also including transmitter and receiver parameters. The transmitter parameters may contain a configuration of a transmit antenna beam pattern (out of a plurality of possible antenna beam patterns). The maximum transmit power for the secondary transmitter may be different for different antenna beam patterns such that for each antenna beam pattern the threshold is not exceeded.

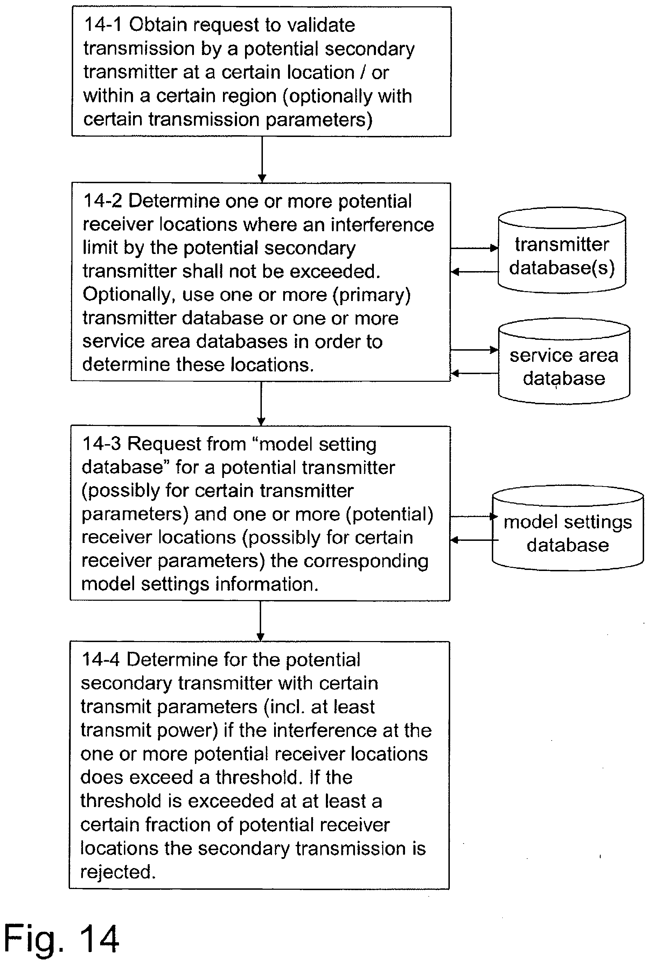

**Fig. 14** shows an exemplifying embodiment in which it is determined if a radio transmitter is allowed to transmit at a certain location.

This can be done for one or more channels.

In a step 14-1, a request to validate transmission by a secondary transmitter at a certain location / or within a certain region (optionally with certain transmission parameters) is obtained.

In a step 14-2, one or more possibly potential (primary) receiver locations, where an interference limit by the secondary transmitter shall not be exceeded, are determined. Optionally, one or more (primary) transmitter databases or one or more service area databases are used in order to determine these locations.

In a step 14-3, the corresponding model settings information is requested from the database comprising model settings information for a transmitter (possibly for certain transmitter parameters) and one or more receiver locations (possibly for certain receiver parameters).

In a step 14-4, it is determined for the secondary transmitter with certain transmit parameters (including at least transmit power) if the interference at the one or more receiver locations does exceed a threshold. If the threshold is exceeded at at least a certain fraction of receiver locations the secondary transmission is rejected. The different transmit parameters may contain a configuration of a transmit antenna beam pattern (out of a plurality of possible beam patterns). Secondary transmission may be allowed or rejected for different antenna beam patterns individually, depending on if the threshold is exceeded for the particular antenna beam pattern.

It may be noted that steps 13-1 to 13-3 are identical to corresponding steps 14-1 to 14-3.

For the estimation of interference area of a secondary transmitter, an exemplifying procedure is elaborated in the following. The following steps may be performed:

1. For all relevant sub-regions of radio receiver locations around the radio transmitter (of a primary system) a signal strength calculation is performed. The relevant radio receiver locations correspond to sub-regions for which a signal strength values is to be estimated. The radio receiver locations may be considered to be relevant when located along the contour of a service area for the radio transmitter. For this a radio receiver location (i.e. sub-region) is mapped to the closest database entry for this receiver. Expressed differently, the sub-region is mapped to a model settings region for which a certain model settings information is applied.

2. From the database the model type, e.g. according to eq. (5), model parameters and/or model parameter values are obtained.

3. From step 2 and with the transmitter and receiver locations the expected receiver signal strength is derived, optionally also taking additional transmitter and receiver parameters (e.g. antenna heights, antenna gains, noise figures, etc.) into account.

4. All locations where the secondary signal strength causes interference larger than the acceptable interference level $I_{2max}$ of the primary system is part of the interference area.

The above steps may be performed for different transmit power levels of the transmitter, as well as, antenna gains and antenna beam patterns of the transmitter.

In order to determine if the secondary system can coexist with a primary system, the following steps may be performed:

1. For all locations where the secondary signal strength causes interference larger than the acceptable interference level $I_{2max}$ of the primary system, the primary signal strength is determined to find out if those locations are within the service area and/or within the protection zone of the primary system.

2. For all relevant primary transmitter locations around the receiver location with large interference a signal strength calculation is performed. For this a receiver location is mapped to the closest database entry for a particular primary transmitter.

3. From the database the propagation model, i.e. model type, (e.g. according to eq. (5)) and model parameter values are obtained.

4. From step 3 and with the transmitter and receiver locations the expected receiver signal strength is estimated, optionally also taking additional transmitter and receiver parameters (e.g. antenna heights, antenna gains, noise figures, etc.) into account.

5. If the primary signal is larger than $\gamma_{1min}$ (according to (1)) the receiver location is within the primary service area and the secondary transmission is therefore not tolerable (at least at the assumed secondary power level)

If the secondary interference area overlaps with the primary service area, the steps may be repeated with lower transmit power of the secondary system.

**Determination of Propagation Model and Associated Parameters**

There exist a large number of propagation models in the scientific literature, and different models are appropriate for different scenarios. These models, in turn, depend on the values of certain parameters. Such parameters may be, e.g., distance between transmitter and receiver, elevation over average terrain for transmitter and/or receiver, carrier frequency, properties of the terrain etc. see for example eq. (5).

Consider a set of candidate propagation models, $\{M_k\}$, $k = 1, ..., K$. Each of these candidate propagation models is associated with a parameter vector, $\{z_k\}$. Hence, the full set of propagation models is given by $(M_k(z_k))$. The database may, for the sub-regions, i.e. the squares shown in Fig. 10, comprise information about what model $M_k$ is appropriate and/or accepted by the regulator, and what values of $z_k$ may be used. This information may be determined by means of measurements as detailed below. Additionally or alternatively, provided detailed topographic information about the area around the primary transmitter and receiver locations is available, propagation models and parameter values may be derived therefrom.

It is desired to find the appropriate $M_k$ and $z_k$ for a sub-region using a set of measurements performed in the sub-region. To this end, sensors are used which measure the channel gains at locations and setups typical for the receivers one wishes to protect. For a TV receiver, the locations and setups which should be protected could be outdoors, well elevated with the main antenna lobe directed towards the TV transmitter. Denote this full set of measurements by $D$. The set $D$ should be large enough to enable reliable determination of $k$ (i.e., the model index) and associated estimation of the parameter vector $z_k$.

Additionally, a model weighting approach may be applied. In such approach a total parameter vector $\bar{z}$ is estimated based on the individual model dependent parameter vectors $z_k$, $k = 1, ...K$. Hence, the total parameter vector

$\bar{z}$ is valid for the sub-regions associated to the individual model dependent parameter vectors $z_k$, $k= 1, ... K.$

In the following, there is described ways of obtaining the set of measurements $D$ which is to be used in the modeling. The objective of the modeling using the measurement set $D$ is to find a good compromise between protection of the primary system and spectrum utilization by the secondary system.

The measurement set D may be obtained by measurements from dedicated sensors and/or user equipment (UE) sensors as explained in the following.

*Dedicated sensors:* A number of dedicated sensors may be used for measuring the measurement set D. The dedicated sensors may be used to mimic deployments of nodes in the primary system. E.g., dedicated sensors may be used to measure the received primary signal from a DTV system. Such measurements may be used to assess the channel model and related parameter values for the primary signal. These dedicated sensors may in fact be working nodes in the primary system with additional functionalities facilitating measurement reporting.

*UE sensors:* Also, measurements collected from UEs, e.g., UEs associated with the secondary system, can be present in D. For example measurements performed to determine when a UE should perform handover between cells can be combined with positioning information. However, if the UEs are deployed in a radically different way than the nodes of the primary system, such as DTV receivers, it can be difficult to extract relevant information from UE measurements.

It should be noted that measurements may be of different quality. Hence, when using D in the modeling, one should be able to give different types of measurements different weights, or use different measurements for different purposes. E.g., in the case of DTV signal modeling, it seems appropriate to give dedicated sensors larger weight than UE sensors when determining path loss over distance. It is expected that the measurement inaccuracies (signal strength and position) are larger for moving UEs than for fixed dedicated sensors. Fixed, dedicated sensors may be more expensive than UEs, also referred to as UE sensors. The use of UE sensors could be more relevant in this case for determination of shadow fading variance or similar, after taking variation due to orientation and non-homogeneous receive antenna diagrams into account.

Additionally, it should be noted that measurements taken in one frequency band could also be used to assess properties of the channel in other nearby frequency bands. For example, if the same DTV tower is broadcasting in multiple DTV channels, the shadow fading in these channels should be correlated, whereas the fast fading should not be correlated. This may enable differentiation between large-scale fading and small-scale fading effects in the measurements. Further, some channel properties such as shadow fading variance could be determined jointly using the measurements from all these channels. Also, if the propagation model includes frequency dependence, one single propagation model could be determined from a single signal source transmitting on several channels. This propagation model can then be used for interpolating channel models for frequencies inside the frequency range of the transmitter, and possibly for extrapolation near the transmit frequencies of the transmitter. The measurement approach as previously described can be equally used to determine signal strengths of one or more primary or secondary transmitters, in order to determine corresponding model settings information.

Even though the present disclosure has been described with reference to specific exemplifying embodiments thereof, many different alterations, modifications and the like will become apparent for those skilled in the art. The described embodiments are therefore not intended to limit the scope of the present disclosure, which is defined by the appended claims.

**Claims**

1. A method in a network node (110, 130, 150) for estimating signal strength in at least one sub-region (211, 212, 221, 222), each of said at least one sub-region (211, 212, 221, 222) being identified by corresponding sub-region coordinate information, of a radio transmitter (110), located at a radio transmitter location, wherein the network node (110, 130, 150) has access to a database, comprising model settings information about a plurality of model settings regions (210, 220) associated with the radio transmitter (110), the method comprising:

   for each of said at least one sub-region (211, 212, 221, 222), obtaining (310) from the database corresponding model settings information, indicative of radio propagation conditions within one of said plurality of model settings regions (210, 220), wherein said one of said plurality of model settings regions (210, 220) corresponds to said at least one sub-region (211, 212, 221, 222) in that said one of said plurality of model settings regions (210, 220) comprises at least a portion of said at least one sub-region (211, 212, 221, 222), wherein the model settings information is dependent on the model settings region (210, 220); and
   for each of said at least one sub-region (211, 212, 221, 222), estimating (320) a corresponding signal strength value based on the radio transmitter location, the corresponding sub-region coordinate information and the model settings information, wherein the signal strength value relates to a signal capable of being sent from the radio transmitter (110) to a radio receiver located within said at least one sub-region (211, 212, 221, 222).

2. The method according to claim 1, further comprising
assigning (330) said at least one sub-region (211, 212, 221, 222) to a reserved region of said radio transmitter, if the corresponding signal strength value exceeds a first threshold value.

3. The method according to claim 1, further comprising
determining (340) a transmit power level of the radio transmitter such that the estimated corresponding signal strength value in each of said at least one sub-region (211, 212, 221, 222) is less than a second threshold value.

4. The method according to claim 3, wherein the determination of a transmit power level is performed for at least one radio beam pattern of the radio transmitter (110) out of a plurality of radio beam patterns of said radio transmitter (110).

5. The method according to any one of the preceding claims, wherein said at least one sub-region (211, 212, 221, 222) comprises at least a first and a second sub-region (211, 212, 221, 222).

6. The method according to the preceding claim, wherein the plurality of model settings regions (210, 220) comprises at least a first and a second model settings region (210, 220), comprising the first and second sub-regions, respectively, wherein model settings information, which is dependent on the first model settings region (210), is different from model settings information, which is dependent on the second model settings region (220).

7. The method according to any one of the preceding claims, wherein the model settings information is based on fitting signal strength values, indicative of signal strength in at least some sub-regions (211, 212), comprised in the model settings region (210) corresponding to the model settings information.

8. The method according to the preceding claim, wherein the fitting signal strength values are based on measurements or high-precision estimates of the signal strength.

9. The method according to any one of the preceding claims, wherein the model settings information comprises one or more of model type and model parameter values.

10. The method according to any one of the preceding claims, wherein the network node (110, 130) comprises the radio transmitter (110) or a radio resource management node (130).

11. The method according to any one of the preceding claims, wherein the network node (110, 130) comprises the database.

12. The method according to any one of the preceding claims, wherein the corresponding signal strength value further is based on a transmit power of the radio transmitter.

13. An arrangement (400) in a network node (110, 130, 150) for estimating signal strength in at least one sub-region (211, 212, 221, 222), each of said at least one sub-region (211, 212, 221, 222) being identified by corresponding sub-region coordinate information, of a radio transmitter (110), located at a radio transmitter location, wherein the network node (110, 130) has access to a database, comprising model settings information about a plurality of model settings regions (210, 220) associated with the radio transmitter (110), the arrangement (400) comprising:

an obtaining unit (410) configured to, for each of said at least one sub-region (211, 212, 221, 222), obtain from the database corresponding model settings information, indicative of radio propagation conditions within one of said plurality of model settings regions (210, 220), wherein said one of said plurality of model settings regions (210, 220) corresponds to said at least one sub-region (211, 212, 221, 222) in that said one of said plurality of model settings regions (210, 220) comprises at least a portion of said at least one sub-region (211, 212, 221, 222), wherein the model settings information is dependent on the model settings region (210, 220); and
an estimating unit (420) configured to, for each of said at least one sub-region (211,212, 221, 222), estimate a corresponding signal strength value based on the radio transmitter location, the corresponding sub-region coordinate information and the model settings information, wherein the signal strength value relates to a signal capable of being sent from the radio transmitter (110) to a radio receiver located within said at least one sub-region (211, 212, 221, 222).

**Patentansprüche**

1. Verfahren in einem Netzwerkknoten (110, 130, 150) zum Schätzen der Signalstärke in zumindest einem Unterbereich (211, 212, 221, 222), wobei jeder der mindestens einen Unterbereiche (211, 212, 221, 222) durch entsprechende Unterbereichs-Koordinateninformationen identifiziert ist, eines Funksenders (110), der an einer Funksenderposition angeordnet ist, wobei der Netzwerkknoten (110, 130, 150) Zugriff auf eine Datenbank hat, umfassend Modelleinstellungsinformationen über eine Vielzahl von Modelleinstellungsbereichen (210, 220), die dem Funksender (110) zugeordnet sind, wobei das Verfahren umfasst:

   für jeden der mindestens einen Unterbereiche (211, 212, 221, 222), Abrufen (310) von entsprechenden Modelleinstellungsinformationen aus der Datenbank, welche die Funkausbreitungsbedingungen in einem aus der Vielzahl von Modelleinstellungsbereichen (210, 220) anzeigen, wobei der eine aus der Vielzahl von Modelleinstellungsbereichen (210, 220) dem mindestens einen Unterbereich (211, 212, 221, 222) dahingehend entspricht, dass der eine aus der Vielzahl von Modelleinstellungsbereichen (210, 220) mindestens einen Teil des mindestens einen Unterbereichs (211, 212, 221, 222) umfasst, wobei die Modelleinstellungsinformationen von dem Modelleinstellungsbereich (210, 220) abhängig sind; und
   für jeden der mindestens einen Unterbereiche (211, 212, 221, 222), Schätzen (320) eines entsprechenden Signalstärkewertes basierend auf der Funksenderposition, den entsprechenden Unterbereichs-Koordinateninformationen und den Modelleinstellungsinformationen, wobei der Signalstärkewert ein Signal betrifft, das von dem Funksender (110) an einen Funkempfänger gesendet werden kann, der sich in dem mindestens einen Unterbereich (211, 212, 221, 222) befindet.

2. Verfahren nach Anspruch 1, des Weiteren umfassend
   Zuweisen (330) des mindestens einen Unterbereichs (211, 212, 221, 222) zu einem reservierten Bereich des Funksenders, wenn der entsprechende Signalstärkewert einen ersten Schwellenwert überschreitet.

3. Verfahren nach Anspruch 1, des Weiteren umfassend
   Bestimmen (340) eines Sendeleistungspegels des Funksenders, so dass der geschätzte entsprechende Signalstärkewert in jedem der mindestens einen Unterbereiche (211, 212, 221, 222) kleiner als ein zweiter Schwellenwert ist.

4. Verfahren nach Anspruch 3, wobei das Bestimmen des Sendeleistungspegels für mindestens ein Funkstrahlmuster des Funksenders (110) aus einer Vielzahl von Funkstrahlmustern des Funksenders (110) durchgeführt wird.

5. Verfahren nach einem der vorhergehenden Ansprüche, wobei der mindestens eine Unterbereich (211, 212, 221, 222) mindestens einen ersten und einen zweiten Unterbereich (211, 212, 221, 222) umfasst.

6. Verfahren nach dem vorhergehenden Anspruch, wobei die Vielzahl von Modelleinstellungsbereichen (210, 220) mindestens einen ersten und einen zweiten Modelleinstellungsbereich (210, 220) umfasst, umfassend den ersten bzw. zweiten Unterbereich, wobei sich die Modelleinstellungsinformationen, die von dem ersten Modelleinstellungsbereich (210) abhängig sind, von den Modelleinstellungsinformationen unterscheiden, die von dem zweiten Modelleinstellungsbereich (220) abhängig sind.

7. Verfahren nach einem der vorhergehenden Ansprüche, wobei die Modelleinstellungsinformationen auf passenden Signalstärkewerten beruhen, die eine Signalstärke in mindestens einigen Unterbereichen (211, 212) anzeigen, welche in dem Modelleinstellungsbereich (210) enthalten sind, der den Modelleinstellungsinformationen entspricht.

8. Verfahren nach dem vorhergehenden Anspruch, wobei die passenden Signalstärkewerte auf Messungen oder hochpräzisen Schätzungen der Signalstärke beruhen.

9. Verfahren nach einem der vorhergehenden Ansprüche, wobei die Modelleinstellungsinformationen eines oder mehrere aus Modelltyp und Modellparameterwerten umfassen.

10. Verfahren nach einem der vorhergehenden Ansprüche, wobei der Netzwerkknoten (110, 130) den Funksender (110) oder einen Funkressourcen-Managementknoten (130) umfasst.

11. Verfahren nach einem der vorhergehenden Ansprüche, wobei der Netzwerkknoten (110, 130) die Datenbank umfasst.

**12.** Verfahren nach einem der vorhergehenden Ansprüche, wobei der entsprechende Signalstärkewert des Weiteren auf einer Sendeleistung des Funksenders basiert.

**13.** Anordnung (400) in einem Netzwerkknoten (110, 130, 150) zum Schätzen der Signalstärke in zumindest einem Unterbereich (211, 212, 221, 222), wobei jeder der mindestens einen Unterbereiche (211, 212, 221, 222) durch entsprechende Unterbereichs-Koordinateninformationen identifiziert ist, eines Funksenders (110), der an einer Funksenderposition angeordnet ist, wobei der Netzwerkknoten (110, 130) Zugriff auf eine Datenbank hat, umfassend Modelleinstellungsinformationen über eine Vielzahl von Modelleinstellungsbereichen (210, 220), die dem Funksender (110) zugeordnet sind, wobei die Anordnung umfasst:

eine Abrufeinheit (410), die dazu konfiguriert ist, für jeden der mindestens einen Unterbereiche (211, 212, 221, 222) entsprechende Modelleinstellungsinformationen aus der Datenbank abzurufen, welche die Funkausbreitungsbedingungen in einem aus der Vielzahl von Modelleinstellungsbereichen (210, 220) anzeigen, wobei der eine aus der Vielzahl von Modelleinstellungsbereichen (210, 220) dem mindestens einen Unterbereich (211, 212, 221, 222) dahingehend entspricht, dass der eine aus der Vielzahl von Modelleinstellungsbereichen (210, 220) mindestens einen Teil des mindestens einen Unterbereichs (211, 212, 221, 222) umfasst, wobei die Modelleinstellungsinformationen von dem Modelleinstellungsbereich (210, 220) abhängig sind; und
eine Schätzeinheit (420), die dazu konfiguriert ist, für jeden der mindestens einen Unterbereiche (211, 212, 221, 222) einen entsprechenden Signalstärkewert basierend auf der Funksenderposition, den entsprechenden Unterbereichs-Koordinateninformationen und den Modelleinstellungsinformationen zu schätzen, wobei der Signalstärkewert ein Signal betrifft, das von dem Funksender (110) an einen Funkempfänger gesendet werden kann, der sich in dem mindestens einen Unterbereich (211, 212, 221, 222) befindet.

## Revendications

**1.** Dans un noeud de réseau (110, 130, 150), procédé pour estimer la force d'un signal dans au moins une sous-région (211, 212, 221, 222) chacune de ladite au moins une sous-région (211, 212, 221, 222) étant identifiée par des informations de coordonnées de sous-région correspondantes d'un émetteur radio (110) situé à un emplacement d'émetteur radio, dans lequel le noeud de réseau (110, 130, 150) a accès à une base de données, comprenant des informations de réglages de modèle concernant une pluralité de régions de réglages de modèle (210, 220) associées à l'émetteur radio (110), le procédé comprenant :

pour chaque région de ladite au moins une sous-région (211, 212, 221, 222) l'obtention (310) à partir de la base de données d'informations de réglages de modèle correspondantes, représentatives des conditions de propagation radio dans une région de ladite pluralité de régions de réglages de modèle (210, 220), dans lequel ladite une de ladite pluralité de régions de réglages de modèle (210, 220) correspond à ladite au moins une sous-région (211, 212, 221, 222) dans ladite une de ladite pluralité de régions de réglages de modèle (210, 220) comprend au moins une partie de ladite au moins une sous-région (211, 212, 221, 222), dans lequel les informations de réglages de modèle dépendent de la région de réglages de modèle (210, 220) ; et
pour chacune de ladite au moins une sous-région (211, 212, 221, 222), l'estimation (320) d'une valeur de force de signal correspondante fondée sur l'emplacement de l'émetteur radio, des informations de coordonnées de sous-région correspondantes et des informations de réglages de modèle, dans lequel la valeur de force de signal concerne un signal capable d'être envoyé par l'émetteur radio (110) à un récepteur radio situé dans ladite au moins une sous-région (211, 212, 221, 222).

**2.** Procédé selon la revendication 1, comprenant en outre
l'assignation (330) de ladite au moins une sous-région (211, 212, 221, 222) à une région réservée dudit émetteur radio, si la valeur de force de signal correspondante dépasse une première valeur de seuil.

**3.** Procédé selon la revendication 1, comprenant en outre
la détermination (340) du niveau de puissance d'émission de l'émetteur radio de sorte que la valeur de force de signal correspondante estimée dans chacune de ladite au moins une sous-région (211, 212, 221, 222) est inférieure à une seconde valeur de seuil.

**4.** Procédé selon la revendication 3, dans lequel la détermination du niveau de puissance d'émission est effectuée pour au moins un modèle de faisceau radio de l'émetteur radio (110) parmi une pluralité de modèles de faisceau radio dudit émetteur radio (110).

**5.** Procédé selon l'une quelconque des revendications précédentes, dans lequel ladite au moins une sous-région (211, 212, 221, 222) comprend au moins une première et une seconde sous-région (211, 212, 221, 222).

**6.** Procédé selon la revendication précédente, dans lequel la pluralité de régions de réglages de modèle (210, 220) comprend au moins une première et une seconde région de réglages de modèle (210, 220), comprenant respectivement les première et seconde sous-régions, dans lequel les informations de réglages de modèle qui dépendent de la première région de réglages de modèle (210) sont différentes des informations de réglages de modèle qui dépendent de la seconde région de réglages de modèle (220).

**7.** Procédé selon l'une quelconque des revendications précédentes, dans lequel les informations de réglages de modèle sont fondées sur des valeurs de force de signal d'ajustement représentatives de la force de signal dans au moins certaines sous-régions (211, 212) comprises dans la région de réglages de modèle (210) correspondant aux informations de réglages de modèle.

**8.** Procédé selon la revendication précédente, dans lequel les valeurs de force de signal d'ajustement sont fondées sur les mesures d'estimation de haute précision de la force de signal.

**9.** Procédé selon l'une quelconque des revendications précédentes, dans lequel les informations de réglages de modèle comprennent une ou plusieurs des valeurs de type de modèle et de paramètres de modèle.

**10.** Procédé selon l'une quelconque des revendications précédentes, dans lequel le noeud de réseau (110, 130) comprend l'émetteur radio (110) ou un noeud de gestion de ressources radio (130).

**11.** Procédé selon l'une quelconque des revendications précédentes, dans lequel le noeud de réseau (110, 130) comprend la base de données.

**12.** Procédé selon l'une quelconque des revendications précédentes, dans lequel la valeur de force de signal correspondante est fondée en outre sur la puissance d'émission de l'émetteur radio.

**13.** Agencement (400) dans un noeud de réseau (110, 130, 150) pour estimer la force d'un signal dans au moins une sous-région (211, 212, 221, 222) chacune de ladite au moins une sous-région (211, 212, 221, 222) étant identifiée par des informations de coordonnées de sous-région correspondantes d'un émetteur radio (110) situé à un emplacement d'émetteur radio, dans lequel le noeud de réseau (110, 130) a accès à une base de données, comprenant des informations de réglages de modèle concernant une pluralité de régions de réglages de modèle (210, 220) associées à l'émetteur radio (110), l'agencement (400) comprenant :

une unité d'obtention (410) configurée pour, pour chacune de ladite au moins une sous-région (211, 212, 221, 222), obtenir à partir de la base de données des informations de réglages de modèle correspondantes, représentatives des conditions de propagation radio dans une région de ladite pluralité de régions de réglages de modèle (210, 220), dans lequel ladite de ladite pluralité de régions de réglages de modèle (210, 220) correspond à ladite au moins une sous-région (211, 212, 221, 222) dans ladite une de ladite pluralité de régions de réglages de modèle (210, 220) comprend au moins une partie de ladite au moins une sous-région (211, 212, 221, 222), dans lequel les informations de réglages de modèle dépendent de la région de réglages de modèle (210, 220) ; et
une unité d'estimation (420) configurée pour, pour chacune de ladite au moins une sous-région (211, 212, 221, 222), estimer une valeur de force de signal correspondante fondée sur l'emplacement de l'émetteur radio, les informations de coordonnées de sous-région correspondantes et les informations de réglages de modèle, dans lequel la valeur de force de signal concerne un signal capable d'être envoyé par l'émetteur radio (110) à un récepteur radio situé dans ladite au moins une sous-région (211, 212, 221, 222).

100

130 RM node

150 network node

140 Database

110

A radio transmitter

150 network node

221

222

220

210

211

212

120 A second radio transmitter

# Fig. 1

150

A network node

140

Database

310 Obtaining model settings information

320 Estimating signal strength

330 Assigning a sub-region to a reserved region

340 Determining transmit power level of the radio transmitter

# Fig. 2

310 Obtaining model settings information

320 Estimating signal strength

330 Assigning a sub-region to a reserved region

**Fig. 3**

340 Determining transmit power level of the radio transmitter

400

150

410 Obtaining unit

430 Sending unit

450 Determining unit

420 Estimating unit

440 Assigning unit

**Fig. 4**

PZ1

IA2

T1 ▪

T2

d

SA1

**Fig. 5**

RSA1

RIA2

T2 ▪

T2

EIA2

ESA1

**Fig. 6**

Fig. 7

820
sub-region

810 model
settings
region

Fig. 8

Fig. 9

Fig. 10

Fig. 11

EP 2 596 657 B1

```
┌─────────────────────────────────┐
│      11-1 Measurements          │
│   (e.g. measurements of         │
│   propagation path gain or      │
│   received signal strengths     │
│   for one or more transmitter   │
│   at at least one location )    │
└─────────────────────────────────┘

              and / or

┌─────────────────────────────────┐    ┌──────────────────────────┐    ┌────────────────────────┐
│  11-2 High-precision estimations│    │  11-4 Model fitting      │    │ 11-5 Model setting     │
│   (e.g. estimations of          │    │  • optionally:           │    │    database            │
│   propagation path gain or      │    │    determining model     │    │  • store model         │
│   received signal strengths     │    │    setting regions       │    │    setting             │
│   for one or more transmitter   │ ─► │  • determining model     │ ─► │    infromation         │
│   at at least one location      │    │    settings information  │    │    for a (potential)   │
│   based on ray-tracing or       │    │    for at least one      │    │    transmitter for     │
│   accurate topography based     │    │    model settings        │    │    one or more         │
│   propagation modeling)         │    │    region                │    │    model setting       │
└─────────────────────────────────┘    └──────────────────────────┘    │    region              │
                                                                        └────────────────────────┘
              and / or

┌─────────────────────────────────┐
│ 11-3 Model settings information │
│   for at least                  │
│   one transmitter, at at least  │
│   one location                  │
└─────────────────────────────────┘
```

12-1 Optionally: Obtain list of (primary) transmitters and transmitter parameters → transmitter database(s)

12-2 Select transmitter and transmitter parameters

12-3 Determine position of a potential receiver (possibly with certain receive parameters)

12-4 Request from "model setting database" for a transmitter (possibly for certain transmitter parameters) and a (potential) receiver location (possibly for certain receiver parameters) the corresponding model settings information → model settings database

12-5 Determine for the transmitter (with its location and transmitter parameters) and the (potential) receiver (and its (potential) location and receiver parameters) if the (potential) receiver is within an estimated service area of the transmitter.

12-6 Optionally: Store information on whether the (potential) receiver is within the service area of the transmitter or not in a service area database → service area database

# Fig.12

13-1 Obtain request to validate transmission by a potential secondary transmitter at a certain location / or within a certain region (optionally with certain transmission parameters)

13-2 Determine one or more potential receiver locations where an interference limit by the potential secondary transmitter shall not be exceeded. Optionally, use one or more (primary) transmitter database or one or more service area databases in order to determine these locations.

transmitter database(s)

service area database

13-3 Request from "model setting database" for a potential transmitter (possibly for certain transmitter parameters) and one or more (potential) receiver locations (possibly for certain receiver parameters) the corresponding model settings information.

model settings database

13-4 Determine for the potential secondary transmitter the maximum transmit power such that the interference at the one or more potential receiver locations does not exceed a threshold. The determination is based at least on the corresponding model settings information and potentially also including transmitter and receiver parameters.

# Fig. 13

14-1 Obtain request to validate transmission by a potential secondary transmitter at a certain location / or within a certain region (optionally with certain transmission parameters)

14-2 Determine one or more potential receiver locations where an interference limit by the potential secondary transmitter shall not be exceeded. Optionally, use one or more (primary) transmitter database or one or more service area databases in order to determine these locations.

transmitter database(s)

service area database

14-3 Request from "model setting database" for a potential transmitter (possibly for certain transmitter parameters) and one or more (potential) receiver locations (possibly for certain receiver parameters) the corresponding model settings information.

model settings database

14-4 Determine for the potential secondary transmitter with certain transmit parameters (incl. at least transmit power) if the interference at the one or more potential receiver locations does exceed a threshold. If the threshold is exceeded at at least a certain fraction of potential receiver locations the secondary transmission is rejected.

# Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6580911 B1